# EUROPÄISCHE PATENTSCHRIFT

(11) **EP 1 561 705 B1**
(45) Veröffentlichungstag und Bekanntmachung des Hinweises auf die Patenterteilung: **23.05.2007**
(21) Anmeldenummer: 04013589.9
(22) Anmeldetag: 09.06.2004
(51) Int. Cl.: B65D 85/00, B32B 27/10, B32B 7/06

(54) **Verpackung für kalterstarrende Massen**
Package for products rigidifying when cold
Emballage pour produits se rigidifiant à froid

(30) Priorität: 05.02.2004 DE 102004005877
(43) Veröffentlichungstag der Anmeldung: 10.08.2005
(73) Patentinhaber: MÖKO Klebstoff GmbH Leipzig, 04316 Leipzig (DE)
(72) Erfinder: Bernstein, Mario, 04571 Rötha (DE); Schellenberger, Matthias, 04277 Leipzig (DE)
(74) Vertreter: Müller, Volkmar

(56) Entgegenhaltungen:
- FR-A- 1 174 021
- FR-A- 2 544 654
- GB-A- 1 555 782
- US-A- 2 791 326

## Beschreibung

Die Erfindung betrifft eine Verpackung für kalterstarrende Massen, insbesondere Schmelzkleber, welche heiß in die Verpackung einfüllbar sind, wobei die Verpackung mehrschichtig aufgebaut ist, zumindest eine Schicht der Verpackung aus Papier, Karton und/ oder Wellpappe besteht und eine weitere, innere Schicht, die nach dem Einbringen der heißen, kalterstarrenden Masse zwischen der vorgenannten, äußeren Schicht und der kalterstarrenden Masse angeordnet ist, hauptsächlich aus einer Kunststoffmasse besteht, wobei die innere Schicht mit der äußeren Schicht lösbar verbunden ist und die innere Schicht mit der kalterstarrenden Masse unlösbar verbindbar ist.

Das Handling von kalterstarrenden Massen, d.h. insbesondere restklebrigen Schmelzklebstoffen, steht auch heute noch im Fokus der Entwicklung, da dieses Problem derzeit immer noch einer Lösung bedarf. Aspekte, wie umweltschonende, anwenderfreundliche und kostengünstige Verpackungen, sind dabei besonders relevant.

Derzeit kommen oftmals handelsübliche silikonisierte Verpackungen zum Einsatz, welche insbesondere den Nachteil aufweisen, dass sich die kalterstarrenden Massen schlecht aus diesen lösen lassen. Die anhaftenden Verpackungsreste führen zumindest mittelfristig zu unerwünschten Verunreinigungen (Cracking) in den Verarbeitungsanlagen.

Durch die DE 2137143 A1 ist eine Verpackung für kalterstarrende Massen, insbesondere Schmelzkleber bekannt. Der heiße Schmelzkleber wird in die Verpackung eingefüllt, wobei die Verpackung aus Karton, Wellpappe o.ä. besteht. Auf diese Verpackungsschicht ist direkt eine Trennschicht oder eine Trennschicht als Zwischenlage auf Papier aufgebracht, wobei die Trennschicht aus zwei Kunststoffschichten besteht, von denen die auf dem Verpackungsmaterial liegende Schicht aus einem Polyolefin, vorzugsweise Polyvinylchlorid, Vinylacetat und / oder einem Acrylsäureester bzw. deren Copolymerisaten besteht.
Die vorgeschlagene Verpackung besteht somit zumindest aus drei Schichten, wobei eine Trennschicht unlösbar mit der äußeren Schicht, welche aus Karton oder Wellpappe besteht, verbunden ist und einer weiteren Trennschicht, welche mit der kalterstarrenden Masse verbunden ist. Diese Verpackung, da zumindest aus drei Schichten bestehend, ist aufwendig herzustellen und somit kostenintensiv, neigt im Bearbeitungsprozess zu unerwünschten Verunreinigungen und die beiden äußeren, verbundenen Schichten sind nur aufwendig zu entsorgen oder einer erneuten Nutzung zuzuführen.

Durch die FR 2 544 654 A2 ist eine Verpackung für kalterstarrenden Massen, welche heiß in die Verpackung einfüllbar sind, wobei die Verpackung mehrschichtig aufgebaut ist, zumindest eine äußere Schicht der Verpackung aus Papier, Karton und/ oder Wellpappe besteht und eine weitere, innere Schicht, die nach dem Einbringen der heißen, kalterstarrenden Masse zwischen der äußeren Schicht und der kalterstarrenden Masse angeordnet ist, hauptsächlich aus einer Kunststoffmasse besteht, bekannt. Die innere Schicht soll mit der äußeren Schicht lösbar und mit der kalterstarrenden Masse unlösbar verbunden sein, wobei keine hinreichenden Angaben zur diesbezüglichen Lösung gegeben werden. Möglich wäre gemäß dem Stand der Technik gewesen, die Polymerfolien heiß aufzuschmelzen und mittels einer Gummiwalze partiell zu verschweißen. Dies hätte allerdings zur Folge, dass beim Trennen der beiden Schichten nach dem Erkalten des Füllgutes an den Schweißstellen Papierfasern aus der Oberfläche der äußeren Schicht herausgerissen werden würden. Dies würde ein unerwünschtes Verstopfen der Auftragsdüsen bei der Weiterverarbeitung des Schmelzgutes verursachen.

Durch die FR 1 174 021 A1 ist eine weitere Verpackung für kalterstarrende Massen, welche heiß in die Verpackung einfüllbar sind, wobei die Verpackung mehrschichtig aufgebaut ist, zumindest eine äußere Schicht der Verpackung aus Papier, Karton und/oder Wellpappe besteht und eine weitere, innere Schicht, die nach dem Einbringen der heißen, kalterstarrenden Masse zwischen der äußeren Schicht und der kalterstarrenden Masse angeordnet ist, hauptsächlich aus einer Kunststoffinasse besteht, bekannt.
Die äußere Schicht der Verpackung wird mit verschiedene Substanzen je nach Anwendung vorbehandelt, beschrieben z.B. mit Siliconlack oder verschiedenen Paraffinen, um ein Verschweißen oder Anhaften der beiden Schichten zu verhindern. Dieser hat jedoch zur Folge, dass es zum einen zu Veränderungen der physikalischchemischen Eigenschaften des eingefüllten Schmelzgutes, insbesondere durch Migration kommt und zum anderen, dass die äußere Schicht selbst verunreinigt wird und deshalb als Sonderabfall zu behandeln ist.

Durch die GB 1 555 782 A1 wird ein Verfahren zur Koextrusion von aufgeschmolzenen Polymeren mittels Breitschlitzdüse und einer gummierten Rasterwalze auf verschiedene Papiersorten zur Herstellung von Papiersäcken mit einer Feuchtigkeitssperre, wie dies gebräuchlich ist für die Verpackung von Zement, offenbart. Es ist bei dem gemäß diese Verfahrens hergestellten Verbundes nicht möglich, beide Schichten zerstörungsfrei voneinander zu Lösen, da die Polymerfolie, wie in der FR 2 544 654 A2 beschrieben, ebenfalls miteinander partiell verschweißt ist.

Aufgabe der Erfindung ist es, eine Verbackung der vorgenannten Art bereitzustellen, die sich effektiv herstellen läßt und deren äußere Schicht sich umweltgerecht verwerten läßt. Außerdem sollen unerwünschte Verunreinigungen im Verarbeitungsprozeß verursacht durch die mit der kalterstarrenden Masse verbundene Schicht entfallen.

Die Aufgabe der Erfindung wird durch die Merkmale des Anspruch 1 gelöst.

Erfindungswesentlich ist dabei, dass die äußere Schicht mit der inneren Schicht auf weniger als 1 % der Fläche, mit welcher diese sich berührenverbunden ist, und der Verbund zwischen äußerer Schicht und innerer Schicht durch eine Rasterwalze herstellbar ist.

Da die beiden Schichten nur teilweise miteinander verbunden sind, nämlich auf weniger als 1 % der Fläche, mit welcher diese sich berühren, wird damit ein besonders einfaches Ablösen der beiden Schichten erreicht, d. h. insbesondere sind nur geringe Kräfte diesbezüglich aufzuwenden.

Die Bezeichnung äußere Schicht ist im Sinne der Erfindung als weiter von der kalterstarrenden Masse entfernt zu verstehen. Im Sinne der Erfindung kann also auch noch zumindest eine weitere Schicht angeordnet sein, welche noch weiter von der kalterstarrenden Masse entfernt ist. Beispielsweise kann als äußerste Umhüllung bzw. Schicht eine Transportverpackung angeordnet sein.

Kunststoffmassen sind im Sinne der Erfindung an sich bekannte Kunststoffe oder Kunststoffgemische, die in Abhängigkeit von der jeweiligen kalterstarrenden Masse mit Blick auf die zu erfüllenden Aufgaben, also insbesondere im Verarbeitungsprozeß der kalterstarrenden Massen nicht zu unerwünschten Verunreinigungen führt, in üblicher Art und Weise auswählbar sind. Der Verbund aus der Schicht bestehend aus einer Kunststoffmasse und der kalterstarrenden Masse gemeinsam aufschmelzbar ist, ohne das diese Schicht unerwünschte Verunreinigungen (Cracking) verursacht. Wobei natürlich auch Kostenaspekte ein Auswahlkriteritun bezüglich möglichst hoher Effizienz darstellen. Beispielsweise seien Kunststoffe genannt, wie Polyolefin, vorzugsweise Polyvinylchlorid, Vinylacetat und / oder einem Acrylsäureester bzw. deren Copolymerisaten.

Die Unteransprüche haben vorteilhafte Weiterbildungen der Erfindung zum Inhalt.

Bezüglich einer hohen Effizienz der Herstellung der erfindungsgemäßen Verpackung und umweltverträglicher Weiterbehandlung der abgetrennten äußeren Schicht ist eine Verpackung, welche zweischichtig aufgebaut ist, besonders bevorzugt.

Weiter Einzelheiten, Merkmale und Vorteile der Erfindung ergeben sich aus der Beschreibung einer bevorzugten Ausführungsform, wobei die Erfindung nicht auf diese beschränkt ist.

Die Verpackung besteht aus zwei Schichten, wobei die außenliegende (äußere) Schicht 1 aus einem 100 g/m² schweren Recyclingpapier und die andere, innere Schicht 2 aus einer 10 µm PE-HD Folie besteht. Der lösbare Verbund wurde mittels einer üblichen Rasterwalze hergestellt. Damit wurde erreicht, dass die beiden Schichten 1 und 2 nur mit ca. 0,5 % der Fläche, mit welcher diese sich berühren, lösbar verbunden sind. Damit wird erreicht, dass sich die äußere Schicht 1 vollständig, d.h. rückstandsfrei, ablösen läßt und einer umweltschonenden Verwertung zugeführt werden kann.

Der Schmelzkleber 3, hier ein Schmelzkleber mit der Handelsbezeichnung MÖKO - Therm S2002 - PET, wird in bekannter Art und Weise bei einer Temperatur von ca. 140°C in die Verpackung gefüllt. Diese Temperatur liegt etwa 10 K unter der Temperatur des Schmelzpunktes der PE-HD Folie (inneren Schicht 2), so dass gewährleistet ist, dass auch nach einer mehrstündigen Abkühlphase keine unlösbare Verbindung zur äußeren Schicht 1 entstehen kann.
Die Verarbeitungstemperatur des Schmelzklebers 3 beträgt ca. 150°C bis 170°C. Bei dieser Verarbeitungstemperatur, die unterhalb der kritischen Temperatur der Folie (innere Schicht 2) von ca. 182°C liegt, ist eine Verkrackung auszuschließen.
Diese Verpackung ist für effektive industrielle Fertigung geeignet.

## Patentansprüche

1. Verpackung für kalterstarrende Massen (3), insbesondere Schmelzkleber, welche heiß in die Verpackung einfüllbar sind, wobei die Verpackung mehrschichtig aufgebaut ist, zumindest eine äußere Schicht (1) der Verpackung aus Papier, Karton und/ oder Wellpappe besteht und eine innere Schicht (2), die hauptsächlich aus einer Kunststoffmasse besteht, wobei die innere Schicht (2) mit der äußeren Schicht (1) lösbar verbunden ist und die innere Schicht (2) mit der kalterstarrenden Masse (3) unlösbar verbindbar ist, **dadurch gekennzeichnet, dass** die äußere Schicht (1) mit der inneren Schicht (2) auf weniger als 1 % der Fläche, mit welcher diese sich berühren, verbunden ist, und der Verbund zwischen äußerer Schicht (1) und innerer Schicht (2) durch eine Rasterwalze herstellbar ist.

2. Verpackung nach Anspruch 1, **dadurch gekennzeichnet, dass** die Verpackung zweischichtig (1, 2) aufgebaut ist.

3. Verpackung nach Anspruch 1, **dadurch gekennzeichnet, dass** die äußere Schicht (1) vollständig von dem Verbund der inneren Schicht (2) und der kalterstarrenden Masse (3) ablösbar ist.

4. Verpackung nach Anspruch 1, **dadurch gekennzeichnet, dass** die Kunststoffmasse aus einer PE-HD Folie besteht.

5. Verpackung nach Anspruch 1, **dadurch gekennzeichnet, dass** der Schmelzpunkt der Kunststoffmasse oberhalb der Einfülltemperatur der heißen, kalterstarrenden Masse (3), vorzugsweise ca. 10 K oberhalb, liegt und die maximale Aufschmelztexnperatur während der Verarbeitung des Verbundes aus der inneren Schicht (2) und der kalterstarrenden Masse (3) unterhalb der Temperatur liegt, welche zur Verkrackung der Kunststoffinasse führt.

## Claims

1. Packaging material for cold-solidifying compounds (3), which in particular include hot-melt adhesive, which can be filled into the packaging material in hot condition, the packaging material being constructed of multiple layers, one exterior layer (1) consisting of paper or cardboard and/or corrugated cardboard, and an interior layer (2) mainly consisting of a plastic material, the interior layer (2) being connected to the exterior layer (1) in a detachable way, and the interior layer (2) being connected to the cold-solidifying compound (3) in an undetachable way, **characterized by** the exterior layer (1) being connected to the interior layer (2) over less than one per cent of the surface over which they contact each other, and the cohesion between exterior layer (1) and interior layer (2) being manufacturable by an anilox roll.

2. Packaging material acording to Claim 1, **characterized by** the packaging material being constructed from two layers.

3. Packaging material acording to Claim 1, **characterized by** the exterior layer (1) and the cold-solidifying compound (3) being fully detachable from the cohesion made of interior layer (2) and the cold-solidifying compound (3).

4. Packaging material acording to Claim 1, **characterized by** the plastic material consisting of a PE-HP film.

5. Packaging material acording to Claim 1, **characterized by** the melting point of the plastic material being higher, preferably ca. 10 K higher, than the filling temperature of the hot, cold-solidifying compound (3), and the maximum fusion temperature during the processing of inner layer (2) and cold-solidifying compound (3) being lower than that which would result in the cracking of the plastic material.

## Revendications

1. Emballage pour les masses qui se solidifient à froid (3), en particulier les colles thermoplastiques, que l'on peut remplir dans l'emballage,
l'emballage étant conçu en plusieurs couches, au moins une couche extérieure (1) de l'emballage est en papier, carton et/ou carton ondulé et une couche intérieure (2) qui se compose principalement d'une masse de matière synthétique, la couche intérieure (2) étant détachable de la couche extérieure (1) et la couche intérieure pouvant être liée avec la masse se solidifiant à froid (3) sans pouvoir être séparées,
***caractérisé en ce que*** la couche extérieure (1) est liée à la couche intérieure (2) sur moins de 1% de la surface avec laquelle celles-ci entrent en contact et **en ce que** la liaison entre la couche extérieure (1) et la couche intérieure (2) peut être créée par un cylindre de trame.

2. Emballage selon la revendication 1 ***caractérisé en ce que*** l'emballage est composé de deux couches.

3. Emballage selon la revendication 1 ***caractérisé en ce que*** la couche extérieure (1) peut être entièrement détachée du composite de la couche intérieure (2) et de la masse se solidifiant à froid (3).

4. Emballage selon la revendication 1 ***caractérisé en ce que*** la masse de matière synthétique est composée d'un film en PEHD.

5. Emballage selon la revendication 1 ***caractérisé en ce que*** le point de fusion de la masse de matière synthétique est supérieur à la température de remplissage de la masse brûlante se solidifiant à froid (3), de préférence env. 10 K, et **en ce que** la température maximale de fusion pendant le traitement du composite de la couche intérieure (2) et de la masse se solidifiant à froid (3) est inférieure à la température conduisant au craquellement de la masse de matière synthétique.
